# EUROPÄISCHE PATENTANMELDUNG

(11) **EP 1 182 625 A1**
(43) Veröffentlichungstag der Anmeldung: **27.02.2002**
(21) Anmeldenummer: 00118543.8
(22) Anmeldetag: 25.08.2000
(51) Int. Cl.: G07F 19/00

(54) **Einleitung einer elektronischen Zahlungstransaktion**

(71) Anmelder: TELEFONAKTIEBOLAGET LM ERICSSON (publ), 126 25 Stockholm (SE)
(72) Erfinder: Zavagli, Guido, 52062 Aachen (DE); Schuba, Marko, 52134 Herzogenrath (DE); Wrona, Konrad, 52074 Aachen (DE)
(74) Vertreter: Tonscheidt, Andreas

(57) **Zusammenfassung**

Die Erfindung betrifft ein Verfahren zur Einleitung einer elektronischen Zahlungstransaktion. Ein Filter FI empfängt eine Zahlungsanforderung 300 und modifiziert sie durch Hinzufügen einer Transaktionskennzeichnung. Er sendet die modifizierte Zahlungsanforderung 301 an einen Transaktionsserver WS, sowie eine Zahlungsanforderungsinformation 302, welche die Transaktionskennzeichnung enthält, an ein Kommunikationsendgerät MS. Der Transaktionsserver WS empfängt die modifizierte Zahlungsanforderung 301, sowie eine Zahlungsinitialisierung 303, welche eine weitere Transaktionskennzeichnung enthält, von dem Kommunikationsendgerät MS. Der Transaktionsserver WS vergleicht die Transaktionskennzeichnungen der modifizierten Zahlungsanforderung 301 und der Zahlungsinitialisierung 303 und führt die Zahlungstransaktion 304 durch, wenn die Transaktionskennzeichnungen übereinstimmen. Die Erfindung betrifft weiterhin einen entsprechenden Filter FI und Transaktionsserver WS, ein Verfahren zur Initialisierung des Filters FI, sowie ein Computerprogramm zur Einleitung einer elektronischen Zahlungstransaktion und Initialisierung des Filters FI.

## Beschreibung

### Gebiet der Erfindung

Die vorliegende Erfindung betrifft den elektronischen Zahlungsverkehr. Insbesondere betrifft die Erfindung ein Verfahren und ein Computerprogramm zur Einleitung einer elektronischen Zahlungstransaktion, einen Filter und einen Transaktionsserver eines Kommunikationssystems mittels derer die elektronische Zahlungstransaktion eingeleitet bzw. durchgeführt wird, sowie ein Verfahren und Computerprogramm zur Initialisierung des Filters.

### Hintergrund der Erfindung

Die steigende Verbreitung mobiler Kommunikationsmittel zur Sprach- und Datenübertragung weckt den Bedarf nach mobilen Diensten im Bereich des elektronischen Geschäftsverkehrs, d.h. Diensten wie elektronischem Bezahlen, Ticketbestellungen oder Home-Banking mittels mobiler Kommunikationsmittel. Dazu können die Zahlungssysteme in Mobilkommunikationssysteme integriert werden. Derartige Mobilkommunikationssysteme sind beispielsweise ein Global System for Mobile Communication (GSM), ein GSM System, welches einen General Packet Radio Service (GPRS) bietet, ein Packet Personal Digital Cellular (PPDC) System, ein Wideband Code Division Multiple Access (WCDMA) System, ein Universal Mobile Telecommunication System (UMTS), ein Bluetooth™ System, ein Digital European Cordless Telecommunications (DECT) System oder drahtlose Local Area Network (LAN)- bzw. drahtlose Asynchronous Transfer Mode (ATM) Systeme.

Ein bekanntes Protokoll für elektronische Zahlungsvorgänge ist das Secure Electronic Transaction (SET™) Protokoll, welches einem Kreditkarteninhaber mittels eines Endgerätes, beispielsweise eines Personal Computers (PC), ein sicheres elektronisches Bezahlen über ein offenes Netz, beispielsweise über das Internet, ermöglicht. Die von SET™ verwendeten Verschlüsselungsalgorithmen stellen hohe Anforderungen an Prozessorleistung und Speicherplatz des Endgerätes. Mobile Kommunikationsmittel, beispielsweise Mobiltelefone, können diese Anforderungen vielfach nicht erfüllen. SET™ ist daher in einer für den PC vorgesehenen Implementierung als Protokoll für elektronische Zahlungsvorgänge mittels mobiler Kommunikationsendgeräte nicht geeignet.

Zwei Konzepte zu einer Implementierung des SET™ Protokolls zur elektronischen Bezahlung mittels mobiler Kommunikationsendgeräte werden in dem Artikel 'Adaptation of the SET Protocol to Mobile Networks and to the Wireless Application Protocol', Proceedings of European Wireless '99, 1999, S. 193-198, VDE-Verlag Berlin, von K. Wrona und G. Zavagli vorgeschlagen. In einem Konzept werden Zahlungstransaktionen von einem SET™ Wallet Server, der beispielsweise Bestandteil eines Mobilkommunikationssystems ist, stellvertretend für das mobile Kommunikationsendgerät durchgeführt. Dabei enthält der SET™ Wallet Server die gesamte SET™-Funktionalität. Die zur Verschlüsselung vom SET Protokoll verwendeten Schlüssel, ein öffentlicher und ein privater Schlüssel des Kunden, d.h. des Benutzers des Kommunikationsendgerätes, sind im SET™ Wallet Server gespeichert.

In einem weiteren Konzept wird ein Split SET™ Server vorgeschlagen. Ebenso wie der SET™ Wallet Server führt der Split SET™ Server Zahlungstransaktionen mittels des SET™ Protokolls stellvertretend für das mobile Kommunikationsendgerät aus. Der Split SET™ Server enthält dazu den öffentlichen Schlüssel des Kunden. Der private Schlüssel des Kunden wird in dem mobilen Kommunikationsendgerät, beispielsweise in einer Subscriber Identity Module (SIM) Karte des Endgerätes oder einer anderen Smart-Card gespeichert.

Zur Kommunikation mit dem SET™ Server und einem Server eines Händlers werden das Hypertext Transfer Protocol HTTP und die Verwendung von Java vorgeschlagen. Zur Kommunikation mit einem Wireless Application Protocol (WAP) Telefon übersetzt ein WAP Proxy Gateway zwischen dem HTTP Protokoll und dem WAP Protokoll.

In beiden beschriebenen Konzepten werden Zahlungstransaktionen durch Zahlungsanforderungen ausgelöst, welche von einem Server eines Händlers an das Kommunikationsendgerät des Kunden gesendet werden. Das Kommunikationsendgerät muß zum elektronischen Bezahlen die jeweilige Zahlungsanforderung verarbeiten können, unabhängig von der Größe der Nachricht, ihrem Inhalt oder dem verwendeten Übertragungsprotokoll. Dies stellt einen erheblichen Aufwand und Kostenfaktor dar, weil dazu im Kommunikationsendgerät ausreichende Ressourcen, d.h. Verarbeitungs- und Speicherkapazität vorgehalten werden müssen.

Die Verwendung eines WAP-Proxy Gateways löst dieses Problem nicht. Wenn beispielsweise eine Zahlungsanforderung, welche als HTTP Nachricht von einem Server des Händlers abgeschickt werden kann, nach der Übersetzung in das WML-Format die zulässige WML-Seitengröße überschreitet, ist sie im Kommunikationsendgerät nicht mehr darstellbar.

In dem Artikel 'Mobile Chip Electronic Commerce: Enabling Credit Card Payment For Mobile Devices', Proceedings of eBiz2000, Juni 2000, Singapur, von M. Schuba und K. Wrona wird das Mobile Chip Electronic Commerce Konzept vorgestellt, welches die Client-Funktionalität des SET™-Protokolls in eine Client-Funktionalität in einem mobilen Kommunikationsendgerät, sowie in eine Serverfunktionalität in einem Mobile Chip Electronic Commerce Server aufteilt. Der elektronische Bezahlvorgang wird durch eine Zahlungsanforderung, die der Server des Händlers an das mobile Endgerät des Kunden sendet, eingeleitet. Die Zahlungsanforderung enthält den zu zahlenden Betrag, eine Währungsangabe, Angaben über Kreditkarten, die von dem Händler akzeptiert werden, eine Adresse des Händlers, sowie Details der aufgegebenen Bestellung. Das mobile Kommunikationsendgerät sendet daraufhin eine Zahlungsinitialisierung an den Mobile Chip Electronic Commerce Server. Die Zahlungsinitialisierung enthält neben Daten aus der Zahlungsanforderung einen Kreditkartentyp, ein Ablaufdatum der Kreditkarte, sowie eine Kontonummer. Nach Erhalt der Zahlungsinitialisierung führt der Mobile Chip Electronic Commerce Server einen zur Zahlung mittels des SET™-Protokolls erforderlichen Nachrichtenaustausch mit dem Server des Händlers, sowie einen Nachrichtenaustausch mit dem Kommunikationsendgerät zur Authentifizierung und zur Zahlungsbestätigung durch.

Ebenso wie bei dem SET™ Wallet Server Konzept und dem Split SET™ Server Konzept ist bei dem Mobile Chip Electronic Commerce Konzept von Nachteil, daß das Kommunikationsendgerät zum Einleiten der elektronischen Zahlungstransaktion die Zahlungsanforderung unabhängig von ihrer Größe, ihrem Inhalt oder dem verwendeten Übertragungsprotokoll verarbeiten und deshalb die notwendigen Ressourcen bereithalten muß.

Alternativ ist es denkbar, daß der Server des Händlers die Fähigkeiten des Kommunikationsendgerätes kennt und die Zahlungsanforderung hinsichtlich ihrer Größe, ihres Inhaltes und des verwendeten Übertragungsprotokolls entsprechenden anpaßt. Dies erfordert jedoch einen erheblichen Aufwand, beispielsweise hinsichtlich der erforderlichen Signalisierung der vorhandenen Verarbeitungskapazitäten. Die Leistungsfähigkeit des Zahlungssystems ist zudem begrenzt, wenn hinsichtlich der Kommunikationsendgeräte die Kompatibilität mit alten oder leistungsschwachen Geräten gewährleistet wird.

### Aufgabe der Erfindung

Es ist die Aufgabe der vorliegenden Erfindung, den elektronischen Zahlungsverkehr, insbesondere mittels mobiler Kommunikationsendgeräte, derart zu verbessern, daß eine zuverlässige Zahlungsabwicklung unabhängig von der Leistungsfähigkeit des Endgerätes gewährleistet ist.

### Zusammenfassung der Erfindung

Die Aufgabe wird erfindungsgemäß gelöst durch die Lehre der unabhängigen Ansprüche 1, 7, 9, 14 und 16.

Anspruch 1 beschreibt ein Verfahren zur Einleitung einer elektronischen Zahlungstransaktion, Anspruch 9 einen Filter eines Kommunikationssystems und Anspruch 14 einen Transaktionsserver.

An einer Einleitung einer elektronischen Zahlungstransaktion sind ein Server eines Händlers, ein Kommunikationsendgerät eines Kunden, ein Transaktionsserver, sowie ein Filter beteiligt. Jeder Anbieter von Waren oder Dienstleistungen kann ein Händler sein. Der Filter ist Bestandteil eines Kommunikationssystems. Das Kommunikationssystem erlaubt eine Kommunikation zwischen dem Server des Händlers, dem Kommunikationsendgerät und dem Transaktionsserver. Vorzugsweise erfolgt die gesamte Kommunikation über den Filter. Der Filter hat u.a. die Aufgabe, bestimmte Nachrichten, welche die elektronische Zahlungstransaktion betreffen, an zugeordnete Empfänger weiterzuleiten.

Der Transaktionsserver, der beispielsweise ein SET™ Wallet Server, ein Split SET™ Server oder ein Mobile Chip Electronic Commerce Server sein kann, verfügt über eine Software, beispielsweise gemäß des SET™ Protokolls, zur Durchführung einer elektronischen Zahlungstransaktion zu Lasten des Kunden. Der Transaktionsserver übernimmt vorteilhafterweise rechen- und speicherplatzintensive Verfahrensschritte der Zahlungstransaktion. Das Kommunikationsendgerät wird nicht mit der Verarbeitung dieser Verfahrensschritte belastet. Die Zahlungstransaktion, welche der Server des Händlers anfordert, wird lediglich durch das Kommunikationsendgerät, beispielsweise ein Mobiltelefon oder eine elektronische Geldbörse, des Kunden bestätigt.

Im folgenden wird der Nachrichtenfluß zur Einleitung einer elektronischen Zahlungstransaktion näher erläutert. Der Server des Händlers fordert mittels einer Zahlungsanforderung eine elektronische Zahlung an. Die Anforderung erfolgt, beispielsweise nachdem ein Kunde mittels des Kommunikationsendgerätes eine Bestellung über das Internet aufgegeben hat. Neben einem zu zahlenden Betrag, einer Währungsangabe, Angaben über von dem Händler akzeptierte Kreditkarten, und einer Adresse des Händlers kann die Zahlungsanforderung Details der aufgegebenen Bestellung enthalten, beispielsweise eine Liste der bestellten Waren oder Dienstleistungen. Auch ein ausformulierter Kaufvertrag oder die Allgemeinen Geschäftsbedingungen des Händlers können Bestandteil der Zahlungsaufforderung sein. Vorteilhafterweise gibt es keine Größenbeschränkung für die Zahlungsanforderung. In einer Ausgestaltung der Erfindung ist die Zahlungsanforderung an den Filter adressiert, d.h. die Filteradresse ist in diesem Fall dem Server des Händlers bekannt. Die Filteradresse kann dem Server des Händlers beispielsweise im Rahmen des Bestellvorgangs durch den Kunden mitgeteilt worden sein, oder sie kann als Bestandteil von Kundendaten beim Server des Händlers gespeichert sein.

Der Filter empfängt und modifiziert die Zahlungsanforderung durch Hinzufügen einer Transaktionskennzeichnung, die beispielsweise ein numerischer Wert sein kann, und sendet die modifizierte Zahlungsanforderung an den Transaktionsserver. Die Adresse des Transaktionsservers kann fest im Filter gespeichert sein. Der Filter sendet eine Zahlungsanforderungsinformation, welche die Transaktionskennzeichnung enthält, an das Kommunikationsendgerät des Kunden. Die Adresse des Kommunikationsendgerätes kennt der Filter beispielsweise aus der Zahlungsanforderung.

Vorteilhafterweise wird die Zahlungsanforderung, die beispielsweise bei einem umfangreichen Einkauf viele Daten enthalten kann, nicht an das Kommunikationsendgerät des Kunden, welches hinsichtlich der Verarbeitungskapazität des Prozessors und hinsichtlich des verfügbaren Speicherplatzes beschränkt sein kann, gesendet, sondern an den Transaktionsserver, der über eine ausreichende Prozessorleistung und über genügend Speicherkapazität zur Verarbeitung großer Zahlungsanforderungen verfügt. Weiterhin ist es vorteilhaft, daß die Luftschnittstelle des Mobilfunksystems zum Kommunikationsendgerät nicht durch die Übertragung der Zahlungsanforderung, die eine große Datenmenge enthält, belastet wird. Verzögerungszeiten, welche durch eine Übertragung der Zahlungsanforderung bei einem System mit geringer Übertragungsrate auf der Luftschnittstelle auftreten und welche die Akzeptanz elektronischer Zahlungsvorgänge auf der Kundenseite verringern, werden vermieden.

Die Zahlungsanforderungsinformation, welche der Filter an das Kommunikationsendgerät sendet, enthält bevorzugt eine wesentlich geringere Datenmenge als die Zahlungsanforderung. Im einfachsten Fall besteht die Zahlungsanforderungsinformation aus der Transaktionskennzeichnung. Die Zahlungsanforderungsinformation kann auch von Mobilfunksystemen mit geringer Datenrate auf der Luftschnittstelle schnell an das Kommunikationsendgerät des Kunden übertragen werden. Die geringe Größe der Zahlungsanforderungsinformation macht ihre Übertragung hinsichtlich des verwendeten Übertragungsmechanismus flexibel. Beispielsweise kann sie mittels einer leitungsvermittelten oder einer paketorientierten Datenverbindung, mittels des Short Message Service (SMS) oder mittels des Unstructured Supplementary Service Data (USSD) übertragen werden. Als weiteres Protokoll, welches auf diesen oder anderen Transportprotokollen aufsetzt, kann vorteilhafterweise WAP verwendet werden.

Nach dem Empfang der Zahlungsanforderungsinformation sendet das Kommunikationsendgerät eine Zahlungsinitialisierung an den Transaktionsserver, dessen Adresse im Kommunikationsendgerät gespeichert sein oder durch den Kunden eingegeben werden kann. Das Senden der Zahlungsinitialisierung kann automatisch nach dem Empfang der Zahlungsanforderungsinformation erfolgen, beispielsweise im Rahmen einer WAP-Session, die von dem Kommunikationsendgerät zu dem Transaktionsserver aufgebaut wird. Die Zahlungsinitialisierung stellt eine Bestätigung für den Transaktionsserver dar, den Zahlungsvorgang durchzuführen. Sie enthält die Transaktionskennzeichnung der Zahlungsanforderungsinformation. Die Zahlungsinitialisierung kann mittels der gleichen Mechanismen übertragen werden wie die Zahlungsanforderungsinformation.

Der Transaktionsserver empfängt von dem Filter die modifizierte Zahlungsanforderung, sowie von dem Kommunikationsendgerät die Zahlungsinitialisierung. Sobald diese beiden Nachrichten vorliegen, vergleicht er ihre Transaktionskennzeichnungen. Wenn die Transaktionskennzeichnungen übereinstimmen, führt der Transaktionsserver die Zahlungstransaktion durch, beispielsweise mittels der Mechanismen des SET™ Protokolls. Durch den Vergleich der Transaktionskennzeichnungen kann der Transaktionsserver auf einfache Art sicherstellen, daß die Zahlung durch den Kunden autorisiert, d.h. freigegeben ist. An der Durchführung der Zahlung kann neben dem Transaktionsserver und dem Server des Händlers ein weiterer Server, beispielsweise auch ein Bankserver eines Kreditinstitutes, beteiligt sein.

Der Filter verfügt über eine Eingangsschnittstelle zum Empfang der Zahlungsanforderung, über eine Ausgangsschnittstelle zum Senden der modifizierten Zahlungsanforderung, sowie der Zahlungsanforderungsinformation, und über eine Rechnereinheit zur Identifizierung und zur Modifikation der Zahlungsanforderung. Die Rechnereinheit kann eine Hardware, beispielsweise ein Prozessor, oder eine Software, beispielsweise eine virtuelle Maschine, sein.

Der Transaktionsserver verfügt über eine Eingangsschnittstelle zum Empfang der modifizierten Zahlungsanforderung und der Zahlungsinitialisierung, über eine Recheneinheit zum Vergleichen der Transaktionskennzeichnungen der modifizierten Zahlungsanforderung und der Zahlungsinitialisierung, sowie über eine Ausgabeschnittstelle, über welche die Recheneinheit die Zahlungstransaktion durchführt, wenn die Transaktionskennzeichnungen übereinstimmen. Zweckmäßig kann die Recheneinheit über einen Speicher verfügen, welcher eine Nachricht, d.h. die modifizierte Zahlungsanforderung oder die Zahlungsinitialisierung, beispielsweise die zuerst empfangene Nachricht, oder beide Nachrichten speichern kann.

Die Erfindung erlaubt die Verwendung komplexer und sicherer Protokolle, beispielsweise des SET™ Protokolls, zur Durchführung von elektronischen Zahlungstransaktionen, die hohe Anforderungen an Rechenkapazität und Speicherplatz stellen, für mobile Kommunikationsendgeräte mit begrenzten Ressourcen.

Weiterhin ist die Erfindung vorteilhaft, wenn die Kommunikation zwischen dem Server des Händlers und dem Kommunikationsendgerät mittels einer Kommunikations-Session, beispielsweise einer WAP-Session, erfolgt, welche keinen anderen Session-Teilnehmer, beispielsweise den Transaktionsserver, als Kommunikationspartner zuläßt, oder welche durch eine Nachricht eines anderen Kommunikationspartner, beispielsweise des Transaktionsserver, unterbrochen oder beendet wird. Die Erfindung erlaubt die Beibehaltung der Kommunikations-Session zwischen dem Server des Händlers und dem Kommunikationsendgerät auch während der Durchführung der elektronischen Zahlungstransaktion mittels des Transaktionsservers, da dieser von dem Filter hinsichtlich des Nachrichtenflusses in die bestehende Kommunikationssession integriert wird.

Der unabhängige Anspruch 7 beschreibt eine Initialisierung eines Filters eines Kommunikationssystems. Der Filter benötigt eine Adresse eines Transaktionsservers, um empfangene Zahlungsanforderungen weiterleiten zu können. Dazu empfängt der Transaktionsserver eine Filterinitialisierungsanforderung, die beispielsweise von einem Kommunikationsendgerät gesendet wird, und die den Transaktionsserver veranlaßt, eine Filterinitialisierungsnachricht, welche seine Adresse enthält, an den Filter zu senden. Die Filterinitialisierungsnachricht wird von dem Filter des Kommunikationssystems empfangen und die enthaltene Adresse im Filter gespeichert.

Die Initialisierung des Filters ist flexibel, d.h. sie kann zu beliebigen Zeitpunkten, beispielsweise vor jedem Senden einer Zahlungsanforderung oder bei einem ersten oder bei jedem Anmelden eines Kommunikationsendgerätes im Kommunikationssystem, erfolgen. Sie erlaubt eine einfache Änderung der Adresse des Transaktionsservers. Die Filterinitialisierung ist besonders vorteilhaft, wenn mehrere Transaktionsserver zur Durchführung von Zahlungstransaktionen zur Verfügung stehen. Die Filterinitialisierungsnachricht kann dann den für einen bestimmten Kunden zuständigen Transaktionsserver angeben, d.h. beispielsweise denjenigen Transaktionsserver, der ein entsprechendes Kundenkonto verwaltet.

Vorteilhafterweise kann die Erfindung als Computerprogramm realisiert werden. Dies erlaubt die Verwendung der Erfindung in Endgeräten, ohne daß Änderungen an der Hardware erforderlich sind. Weiterhin erlaubt das Computerprogramm im Rahmen von Herstellungsprozessen die einfache und kostengünstige Durchführung von Tests und Simulationen.

Weitere vorteilhafte Ausführungsformen und Verbesserungen der Erfindung sind den abhängigen Ansprüchen 2 bis 6, 8, 10 bis 13, 15 und 17 zu entnehmen.

Gemäß Anspruch 2 ist die Transaktionskennzeichnung eine Zufallszahl. Gemäß Anspruch 10 erfolgt die Ermittlung der Zufallszahl durch einen Zufallszahlengenerator, beispielsweise mittels einer mathematischen Zufallsfunktion, des Filters. Der Zufallscharakter der Transaktionskennzeichnung kann Manipulationen unbefugter Dritter, beispielsweise mittels gefälschter Zahlungsinitialisierungen, verhindern. In einer weiteren Ausgestaltung der Erfindung ist die ermittelte Transaktionskennzeichnung einmalig, zumindest in einem bestimmten Zeitraum. Dies kann beispielsweise sichergestellt werden, indem der Filter alle in dem Zeitraum ermittelten Transaktionskennzeichnungen speichert. Nach der Ermittlung einer weiteren Transaktionskennzeichnung stellt der Filter vor einer Verwendung dieser weiteren Transaktionskennzeichnung mittels einer Speicherabfrage sicher, daß die weitere Transaktionskennzeichnung keiner der abgespeicherten Transaktionskennzeichnungen entspricht. Die Einmaligkeit der verwendeten Transaktionskennzeichnung schützt vor Verwechslungen bei der durch den Transaktionsserver durchgeführten Zuordnung von modifizierter Zahlungsanforderung und Zahlungsinitialisierung.

Gemäß Anspruch 3 ist die Zahlungsanforderung für das Kommunikationsendgerät bestimmt, d.h. sie ist an das Kommunikationsendgerät adressiert. Der Filter, der sich im Übertragungsweg zwischen dem Server des Händlers und dem Kommunikationsendgerät befindet, erkennt bei einer Untersuchung einer empfangenen Nachricht anhand eines ersten Bezeichners, der den Nachrichtentyp kennzeichnet, beispielsweise bei Verwendung eines HTML-Nachrichtenformates anhand des Content-Typs, z.B. 'application/payment-request', daß es sich um eine Zahlungsanforderung handelt. Der Filter fängt diese Nachricht ab, d.h. sie wird dem Kommunikationsendgerät nicht zugestellt, sondern wie unter Anspruch 1 angegeben weiterverarbeitet. Dadurch ist der Filter transparent, d.h. unsichtbar, für den Server des Händlers. Der Server des Händlers muß die Zahlungsanforderung nicht an den Filter adressieren und benötigt daher keine Adresse des Filters. Daher kann ein Betreiber des Kommunikationssystems, beispielsweise zur Wartung des Systems, Rekonfigurationen wie einen Austausch des Filters oder eine Änderung der Filteradresse einfach und unbemerkt von dem Server des Händlers vornehmen.

Gemäß Anspruch 11 erfolgen die Überprüfung, ob die Zahlungsanforderung den ersten Bezeichner enthält, und das Abfangen mittels der Recheneinheit des Filters.

Die Ausgestaltungen, die in den Ansprüchen 4, 12 und 15 beschrieben sind, gestatten eine vorteilhafte Initialisierung des Filters.

Gemäß der Ansprüche 5, 8 und 13 wird die Filterinitialisierungsnachricht von dem Filter mittels eines Bezeichners erkannt und abgefangen. Der Bezeichner kann beispielsweise bei der Verwendung des HTTP-Nachrichtenformates ein Content-Typ, z.B. 'application/filter-initiation', sein. Vorteilhafterweise wird die Filteradresse dadurch zur Einleitung der Filterinitialisierung nicht benötigt. Zur Adressierung der Filterinitialisierungsnachricht kann eine beliebige Adresse verwendet werden, wenn alle von dem Transaktionsserver gesendeten Nachrichten über den Filter des Kommunikationssystems geleitet werden. Beispielsweise kann die Filterinitialisierungsnachricht an das Kommunikationsendgerät adressiert werden.

Gemäß Anspruch 6 und Anspruch 15 sendet der Transaktionsserver nach einem Empfang einer Filterinitialisierungsanforderung, die von dem Kommunikationsendgerät geschickt wird, eine entsprechende Filterinitialisierung an den Filter. Die Filterinitialisierungsanforderung enthält im einfachsten Fall eine Kennzeichnung, die den Transaktionsserver zum Absenden der Filterinitialisierung veranlaßt. Die Kennzeichnung kann beispielsweise ein Content-Typ sein, z.B. 'application/filterinit-request'. Vorteilhafterweise ist der Filter nicht sichtbar für das Kommunikationsendgerät. Diese Art der Filterinitialisierung dient der Sicherheit gegen Manipulationsversuche Dritter. Der Filter kann beispielsweise so eingestellt werden, daß er keine Initialisierungsnachrichten von Kommunikationsendgeräten, sondern nur von bestimmten Transaktionsservern annimmt.

Gemäß Anspruch 17 ist das Computerprogramm auf einem computerlesbaren Medium gespeichert. Dies ermöglicht, beispielsweise bei der Verwendung von Disketten oder CD-Roms eine einfache Portabilität des Computerprogramms, und somit den einfachen Einsatz der Erfindung in verschiedenen Geräten, wie beispielsweise auf Testsystemen, Simulationssystemen oder Maschinen zur Endgerätefertigung.

Im folgenden wird die Erfindung anhand von Ausführungsbeispielen und anhand der Figuren näher erläutert.

### Kurzbeschreibung der Figuren

Folgende Figuren zeigen:
- Fig. 1: ein System für elektronische Zahlungstransaktionen,
- Fig. 2: ein weiteres System für elektronische Zahlungstransaktionen,
- Fig. 3: einen Nachrichtenfluß zwischen Elementen eines Systems für elektronische Zahlungstransaktionen zur Einleitung einer Zahlungstransaktion,
- Fig. 4: einen Nachrichtenfluß zur Initialisierung eines Filters eines Systems für elektronische Zahlungstransaktionen.

### Beschreibung der Ausführungsbeispiele

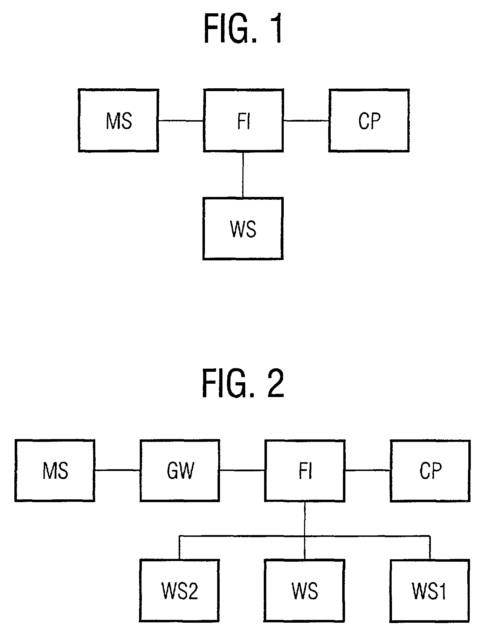

Fig. 1 zeigt in einer vereinfachten Darstellung ein System für elektronische Zahlungstransaktionen. Es besteht aus einem Server CP eines Händlers, einem Filter FI, einem Transaktionsserver WS und einem Kommunikationsendgerät MS. Der Filter FI ist mit allen gezeigten Komponenten logisch verbunden. Der gesamte Nachrichtenverkehr zwischen dem Server CP des Händlers und dem Kommunikationsendgerät MS erfolgt im angegebenen Ausführungsbeispiel über den Filter FI.

Das Kommunikationsendgerät MS ist vorzugsweise ein mobiles Endgerät, beispielsweise ein Mobiltelefon, vorzugsweise ein WAP-Telefon, ein Laptop oder ein Personal Digital Assistent PDA. Der Filter FI ist Bestandteil eines Kommunikationssystems, beispielsweise eines GSM-, GPRS-, PPDC-, WCDMA-, UMTS-, Bluetooth™-, DECT-, eines drahtlosen LAN- oder eines drahtlose ATM Systems. Die Kommunikation zwischen dem Kommunikationsendgerät und dem Filter erfolgt über eine in der Figur nicht gezeigte Infrastruktur, beispielsweise über Basisstationen und Vermittlungsstellen, des Kommunikationssystems. Der Filter FI, der Server CP des Händlers und der Transaktionsserver WS können jeweils Bestandteil eines paketvermittelnden Netzes, beispielsweise des Internet, sein. Alternativ können der Server CP des Händlers oder der Transaktionsserver WS mit dem Filter FI über eine Selbstwahlverbindung oder über eine Standleitung verbunden sein. Der Filter FI und der Transaktionsserver können in einer weiteren Ausführungsform in einem Knoten des Kommunikationssystems zusammengefaßt sein. Beide können durch ein gemeinsames Softwareprogramm kontrolliert werden.

Der Server des Händlers CP ist vorzugsweise ein Internetserver, der auf HTML-oder WML-Seiten das Einkaufen von Waren oder Dienstleistungen anbietet. Eine Software im Kommunikationsendgerät MS, beispielsweise ein HTML-Betrachter, erlaubt dem Kunden die Auswahl der gewünschten Güter und eine entsprechende Bestellung. Sowohl Kundendaten als auch die Software können auf einer SIM-Karte des Kommunikationsendgerätes untergebracht sein.

Nach einer Bestellung erfolgt die Bezahlung durch eine Zahlungstransaktion, die von dem Transaktionsserver WS durchgeführt wird. Dazu kann der Transaktionsserver WS eine Datenbank mit einem entsprechenden Kundenkonto enthalten. Der Filter FI ermöglicht es u.a., für das Kommunikationsendgerät bestimmte Nachrichten an den Transaktionsserver umzuleiten.

Die Zahlungstransaktion wird vorzugsweise mittels des SET™ Protokolls durchgeführt, welches jeweils im Transaktionsserver WS und sowie im Server CP des Händlers implementiert ist. Die Server WS, CP können beispielsweise die zur Verwendung des SET™ Protokolls erforderlichen Verschlüsselungs- und Authentifizierungsmaßnahmen durchführen. Die elektronische Bezahlung kann abhängig vom verwendeten Protokoll weitere, in der Figur nicht gezeigte, Knoten involvieren, beispielsweise einen Server oder ein Gateway eines Kreditinstitutes.

Fig. 2 zeigt in einer vereinfachten Darstellung ein weiteres System für elektronische Zahlungstransaktionen. Im folgenden werden nur Komponenten und Funktionen erklärt, die hinsichtlich Fig. 1 nicht erläutert wurden. Das System enthält zusätzlich zwischen dem Kommunikationsendgerät MS und dem Filter FI ein Gateway GW, welches zur Protokollkonvertierung dient. Vorzugsweise erfolgt die Kommunikation zwischen dem Server CP des Händlers, dem Filter FI, dem Transaktionsserver WS und dem Gateway GW mittels des HTTP-Protokolls. Das Kommunikationsendgerät verwendet dagegen beispielsweise WAP als höheres Übertragungsprotokoll. Das Gateway GW führt die Übersetzung zwischen den Protokollen durch.

Das in Fig. 2 gezeigte System für elektronische Zahlungstransaktionen enthält weiterhin mehrere Transaktionsserver WS, WS1, WS2. Beispielsweise können mehrere Kreditkarteninstitute jeweils einen eigenen Transaktionsserver WS, WS1, WS2 betreiben. Zahlungstransaktionen eines Kunden, der über verschiedene Kreditkarten verfügt, können in Abhängigkeit von der jeweils zur Bezahlung ausgewählten Kreditkarte mittels unterschiedlicher Transaktionsserver WS, WS1, WS2 ausgeführt werden. Die Verwendung mehrerer Transaktionsserver kann auch zur Lastverteilung oder Kapazitätserweiterung dienen.

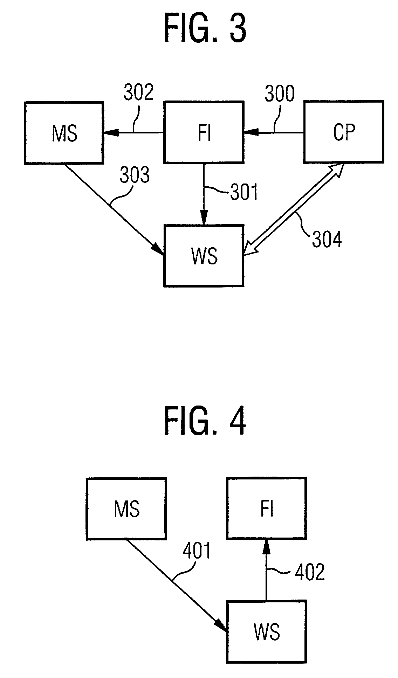

Fig. 3 zeigt einen Nachrichtenaustausch zwischen Komponenten eines Systems für elektronische Zahlungstransaktionen. Dargestellt ist der Informationsfluß zwischen einem Server CP eines Händlers, einem Filter FI, einem Transaktionsserver WS und einem Kommunikationsendgerät MS. Nachdem beispielsweise ein Bestellvorgang eines Kunden bei einem Händler erfolgt ist, wird eine elektronische Zahlungstransaktion eingeleitet. Dazu sendet der Server CP des Händlers eine Zahlungsanforderung 300 an das Kommunikationsendgerät MS des Kunden. Die Zahlungsanforderung enthält beispielsweise den zu zahlenden Rechnungsbetrag, eine Währungsangabe, Angaben über akzeptierte Kreditkarten oder eine Kontoverbindung des Händlers, eine Adresse des Händlers, sowie Details der aufgegebenen Bestellung. Weiterhin enthält die Zahlungsanforderung 300 einen ersten Bezeichner, der sie als eine Nachricht vom Typ 'Zahlungsanforderung' kennzeichnet, beispielsweise bei der Verwendung des HTTP Protokolls einen Content-Typ 'application/payment-request'. Der Filter FI untersucht alle empfangenen Nachrichten daraufhin, ob sie einen solchen Bezeichner enthalten. Nachrichten, die diesen Bezeichner enthalten, werden nicht an den ursprünglich vorgesehenen Adressaten weitergeleitet, sondern abgefangen. Die in Fig. 3 angegebene Zahlungsanforderung 300 enthält diesen ersten Bezeichner, und sie wird deshalb nicht an das Kommunikationsendgerät MS weitergeleitet.

Statt dessen modifiziert der Filter FI die Zahlungsanforderung 300 durch das Hinzufügen einer Transaktionskennzeichnung. Der Filter sendet die modifizierte Zahlungsanforderung 301 an den Transaktionsserver WS. Die Adresse des Transaktionsservers WS ist entweder fest im Filter abgespeichert, beispielsweise in einem ROM-Speicher, oder sie wird dem Filter im Rahmen einer Filterinitialisierung, wie später noch beschrieben wird, mitgeteilt.

In einer weiteren Ausführungsform wird die zur Modifikation der Zahlungsanforderung zu verwendende Transaktionskennzeichnung dem Filter FI von dem Kommunikationsendgerät MS, beispielsweise nach einer erfolgten Bestellung von Waren oder Dienstleistungen bei dem Server CP des Händlers, mitgeteilt. Damit kann sichergestellt werden, daß der Filter Zahlungsanforderungen des Servers des Händlers nur dann bearbeitet, wenn er die vom Kommunikationsendgerät vergebene Transaktionskennzeichnung vorliegen hat. Durch dieses Sicherheitsmerkmal kann sichergestellt werden, daß der Filter keine unerwarteten Zahlungsanforderungen bearbeitet. Weiterhin kann der mitgeteilten Transaktionskennzeichnung eine bestimmte Gültigkeitsdauer zugewiesen werden, um zu verhindern, daß sie, falls der Server CP des Händlers keine Zahlungsanforderung sendet, fälschlicherweise für eine Einleitung einer späteren Zahlungstransaktion verwendet wird.

Der Filter FI sendet weiterhin eine Zahlungsanforderungsinformation 302 an das Kommunikationsendgerät MS. Die Zahlungsanforderungsinformation 302 enthält im wesentlichen die gleiche Transaktionskennzeichnung, mittels derer die Zahlungsanforderung 300 modifiziert worden ist. Das Kommunikationsendgerät reagiert, automatisch oder auf Veranlassung des Kunden, mit dem Absenden einer Zahlungsinitialisierung 303 an den Transaktionsserver WS. Die Zahlungsinitialisierung 303 enthält die Transaktionsnummer, welche in der Zahlungsanforderungsinformation 301 enthalten war.

Der Transaktionsserver vergleicht für die empfangene modifizierte Zahlungsinformation 301 und für die empfangene Zahlungsinitialisierung 302 deren Transaktionskennzeichnungen. Eine Übereinstimmung entspricht in dem gezeigten Ausführungsbeispiels einer Bestätigung der Zahlung, und der Transaktionsserver WS führt durch eine Kommunikation mit dem Server CP des Händlers die Zahlungstransaktion 304 durch. In Abhängigkeit von dem verwendeten Protokoll zur Durchführung der elektronischen Zahlung kann die dargestellte Zahlungstransaktion 304 eine Vielzahl von Nachrichten umfassen, welche zwischen dem Transaktionsserver WS und dem Server CP des Händlers ausgetauscht werden, oder auch eine weitere Instanz, beispielsweise einen Server eines Kreditinstitutes, einbeziehen.

Fig. 4 zeigt einen Nachrichtenfluß zur Initialisierung eines Filters FI eines Systems für elektronische Zahlungstransaktionen. Filterinitialisierung bedeutet, daß dem Filter FI eine Adresse eines Empfängers, beispielsweise eines Transaktionsservers WS, mitgeteilt wird, welcher stellvertretend für ein bestimmtes Kommunikationsendgerät MS oder einen bestimmten Kunden einen oder mehrere bestimmte Nachrichtentypen, beispielsweise eine Zahlungsanforderung empfängt und verarbeitet, d. h. beispielsweise eine elektronische Zahlungstransaktion durchführt. In einer weiteren Ausgestaltung der Erfindung wird an den Filter bei der Initialisierung übertragen, für welche Nachrichtentypen dies gelten soll. Weiterhin können dem Filter bei der Initialisierung Verarbeitungsregeln für Nachrichten eines bestimmten Typs gesendet werden, beispielsweise zur Modifikation von Nachrichten dieses Typs.

Das Beispiel von Fig. 4 zeigt eine Filterinitialisierungsanforderung 401, welche von einem Kommunikationsendgerät MS an einen Transaktionsserver WS gesendet wird. Um eine Umleitung einer Zahlungsanforderung 300, die für das Kommunikationsendgerät MS bestimmt ist, von dem Filter FI an den Transaktionsserver WS zu ermöglichen, sendet der Transaktionsserver WS dem Filter FI seine Adresse mittels einer Filterinitialisierungsnachricht 402 zu.

In weiteren Ausgestaltungen der Erfindung repräsentieren die in den Figuren 3 und 4 dargestellten Nachrichten jeweils ein Nachrichtenbündel, welches Nachrichten zur Bestätigung, Authentifizierung oder Verschlüsselung umfassen kann.

Eine weitere Ausgestaltung der vorliegenden Erfindung betrifft ein Computerprogramm. Das Computerprogramm, welches in einen internen Speicher einer digitalen Rechnereinheit, insbesondere eines Kommunikationsendgerätes, geladen werden kann, enthält Softwarecodeteile, die geeignet sind, das erfindungsgemäße Verfahren durchzuführen, wenn das Computerprogramm auf der Rechnereinheit ausgeführt wird.

Dieses Computerprogramm kann insbesondere auch auf einem computerlesbaren Medium wie beispielsweise einer Diskette, CD-ROM oder einer optischen Platte gespeichert sein.

## Patentansprüche

1. Verfahren zur Einleitung einer elektronischen Zahlungstransaktion mit folgenden Schritten:
- Empfangen einer Zahlungsanforderung (300) durch einen Filter (FI) eines Kommunikationssystems,
- Modifizieren der Zahlungsanforderung (300) durch Hinzufügen einer Transaktionskennzeichnung,
- Übertragen der modifizierten Zahlungsanforderung (301) an einen Transaktionsserver (WS),
- Übertragen einer Zahlungsanforderungsinformation (302), welche die Transaktionskennzeichnung enthält, von dem Filter (FI) an ein Kommunikationsendgerät (MS),
- Übertragen einer Zahlungsinitialisierung (303), welche eine weitere Transaktionskennzeichnung enthält, von dem Kommunikationsendgerät (MS) an den Transaktionsserver (WS),
- Vergleichen der Transaktionskennzeichnungen der modifizierten Zahlungsanforderung (301) und der Zahlungsinitialisierung (303) durch den Transaktionsserver (WS),
- Durchführen der Zahlungstransaktion (304) durch den Transaktionsserver (WS), wenn die Transaktionskennzeichnungen übereinstimmen.

2. Verfahren nach Anspruch 1, bei welchem die Transaktionskennzeichnung eine Zufallszahl ist.

3. Verfahren nach Anspruch 1 oder 2, bei welchem die Zahlungsanforderung (300) für das Kommunikationsendgerät (MS) bestimmt ist und von dem Filter (FI) mittels eines ersten Bezeichners erkannt und abgefangen wird.

4. Verfahren nach Anspruch 1, 2 oder 3,
bei welchem der Filter (FI) eine Filterinitialisierungsnachricht (402), die eine Adresse des Transaktionsservers (WS) enthält, empfängt und speichert,
und bei welchem der Filter (FI) die modifizierte Zahlungsanforderung (301) mittels der gespeicherten Adresse sendet.

5. Verfahren nach Anspruch 4, bei dem der Filter (FI) die Filterinitialisierungsnachricht (402) mittels eines zweiten Bezeichners erkennt und abfängt.

6. Verfahren nach einem der Ansprüche 1 bis 5, bei dem der Transaktionsserver (WS) nach Empfang einer Filterinitialisierungsanforderung (401) die Filterinitialisierungsnachricht (402) sendet.

7. Verfahren zur Initialisierung eines Filters (FI) eines Kommunikationssystems, bei dem ein Transaktionsserver (WS) eine Filterinitialisierungsanforderung (401) empfängt,
bei dem der Transaktionsserver (WS) eine Filterinitialisierungsnachricht (402) mit einer Adresse, die den Transaktionsserver (WS) bezeichnet, sendet,
und bei dem der Filter (FI) die Filterinitialisierungsnachricht (402) empfängt und die Adresse speichert.

8. Verfahren nach Anspruch 7, bei dem der Filter (FI) die Filterinitialisierungsnachricht (402) mittels eines Bezeichners erkennt und abfängt.

9. Filter für ein Kommunikationssystem, mit
- einer Eingangsschnittstelle zum Empfang einer Zahlungsanforderung (300),
- einer Rechnereinheit zur Identifizierung der Zahlungsanforderung (300) und zur Modifikation durch Hinzufügen einer Transaktionskennzeichnung,
- einer Ausgangsschnittstelle zum Senden der modifizierten Zahlungsanforderung (301) an einen Transaktionsserver (WS), sowie zum Senden einer Zahlungsanforderungsinformation (302), welche die Transaktionskennzeichnung enthält, an ein Kommunikationsendgerät (MS).

10. Filter nach Anspruch 9, mit einem Zufallszahlengenerator, welcher als die Transaktionskennzeichnung eine Zufallszahl ermittelt.

11. Filter nach Anspruch 9 oder 10, bei welchem die Rechnereinheit das Vorhandensein eines ersten Bezeichners in der Zahlungsanforderung (300) überprüft und die Zahlungsaufforderung (300) abfängt.

12. Filter nach Anspruch 9, 10 oder 11, welcher eine Filterinitialisierungsnachricht (402), die eine Adresse des Transaktionsservers (WS) enthält, über die Eingangsschnittstelle empfängt und in einem Speicher speichert, und bei welcher die modifizierte Zahlungsanforderung (301) mittels der gespeicherten Adresse sendet.

13. Filter nach einem der Ansprüche 9 bis 12, welcher die Filterinitialisierungsnachricht (402) mittels eines zweiten Bezeichners erkennt und abfängt.

14. Transaktionsserver, mit
- einer Eingangsschnittstelle zum Empfang einer modifizierten Zahlungsanforderung (301) mit einer ersten Transaktionskennzeichnung und zum Empfang einer Zahlungsinitialisierung (303) mit einer zweiten Transaktionskennzeichnung,
- einer Recheneinheit zum Vergleichen der Transaktionskennzeichnungen der modifizierten Zahlungsanforderung (301) und der Zahlungsinitialisierung (303), und mit
- einer Ausgabeschnittstelle, über welche die Recheneinheit eine Zahlungstransaktion (304) durchführt, wenn die Transaktionskennzeichnungen übereinstimmen.

15. Transaktionsserver (WS) nach Anspruch 14, welcher nach einem Empfang einer Filterinitialisierungsanforderung (401) eine Filterinitialisierungsnachricht (402) sendet.

16. Computerprogramm, welches in einen internen Speicher einer digitalen Rechnereinheit geladen werden kann, und welches Softwarecodeteile enthält, die geeignet sind, die Schritte nach einem der Ansprüche 1 bis 8 durchzuführen, wenn das Computerprogramm auf der Rechnereinheit ausgeführt wird.

17. Computerprogramm nach Anspruch 16, bei dem das Computerprogramm auf einem computerlesbaren Medium gespeichert ist.
